# EUROPEAN PATENT APPLICATION

(11) **EP 4 243 139 A1**
(43) Date of publication of application: **13.09.2023**
(21) Application number: 22881363.0
(22) Date of filing: 13.10.2022
(51) Int. Cl.: H01M 10/04, H01M 10/44, H02J 7/00

(54) **PRESSURE CHANNEL AND SECONDARY BATTERY CHARGING/DISCHARGING DEVICE COMPRISING SAME**

(30) Priority: 15.10.2021 KR 20210137435
(71) Applicant: LG Energy Solution, Ltd., Seoul 07335 (KR)
(72) Inventor: LEE, Hak Sik, Daejeon 34122 (KR); KIM, Jun Wan, Daejeon 34122 (KR)
(74) Representative: Goddar, Heinz J.
(86) International application number: PCT/KR2022/015471
(87) International publication number: WO 2023/063736

(57) **Abstract**

The present invention relates to a pressurized channel that can improve pressure drop in both ends of the secondary battery during formation process and an apparatus for charging and discharging a secondary battery including the same.
The pressurized channel according to an exemplary embodiment of the present invention includes a pair of pressurized plates disposed on both sides of the secondary battery with the secondary battery interposed therebetween, and the pressurized plate includes a body part and an exterior part connected to both ends of the body part and including a tube inside that is expanded by hydraulic pressure.

## Description

### [Technical Field]

This application claims the benefit of a priority based on Korean Patent Application No. 10-2021-0137435, filed on October 15, 2021, and the entire contents of the Korean patent application are incorporated herein by reference.

The present invention relates to an apparatus for charging and discharging a secondary battery, more specifically a pressurized channel that can improve pressure drop in both ends of the secondary battery in longitudinal direction during formation process and the apparatus for charging and discharging the secondary battery comprising the same.

### [Background Technology of the Invention]

Generally, secondary batteries can be classified into cylindrical, prismatic, pouch-type, etc. depending on its shape. Among them, the pouch-type secondary battery, because its exterior is made up of exterior materials that is composed of a metal layer(foil) and a synthetic resin multilayer that is coated on the lower and upper surface of the metal layer, allows light weighting of a battery by significantly reducing the weight of the battery compared to a cylindrical or a prismatic battery which uses a metal can. A pouch-type battery is also drawing a lot of attention by having an advantage of being able to change into diverse forms.

Such pouch-type secondary battery is stored with an electrode assembly in a layered form. The electrode assembly is connected with an electrode tab and an electrode lead, and the electrode lead is protruded from the pouch exterior material. Such electrode lead is supplied with electric power from external device by being electrically connected to the external device through contact.

A pouch-type secondary battery is manufactured through a process of assembling the cell and activating the battery, and in the battery activation process, the secondary battery cell is loaded to an apparatus for charging and discharging, then the charging-discharging is carried out under necessary conditions for battery activation. As such, the process of carrying out charging-discharging using the apparatus for charging and discharging for battery activation is called a formation process.

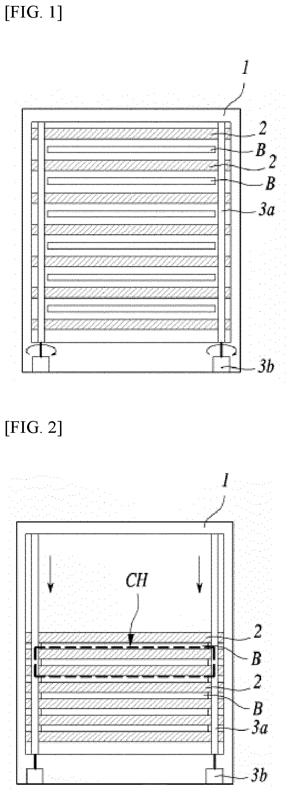

By referring to FIG. 1 and FIG.2, an apparatus for charging and discharging a secondary battery according to conventional art used in formation process is explained. FIG. 1 and FIG. 2 are drawings illustrating the apparatus for charging and discharging a secondary battery according to conventional art.

Referring to FIG. 1 and FIG. 2, the apparatus for charging and discharging a secondary battery according to the conventional art includes a frame 1, a pressurized plate 2, and a driving part 3:3a,3b. The driving part 3 includes a drive shaft 3a and a drive motor 3b.

Inside frame 1, multiple pressurized plates 2 are placed, and a secondary battery B that carries out the formation process is placed between the pressurized plate 2 and the pressurized plate 2.

As illustrated in FIG. 1, when the driving shaft 3a rotates after the driving motor 3b starts rotating, the multiple pressurized plates 2 that are intermeshed move in one direction, and as shown in FIG. 2, the pressurized plates 2 pressurize both sides of the secondary battery B.

A pair of the pressurized plates 2 that is placed on both sides of the secondary battery B with the secondary battery B interposed therebetween forms a pressurized channel unit CH, and the apparatus for charging and discharging a secondary battery has the multiple pressurized channel units CH. Any one of the pressurized plates 2 forms the pressurized channel unit CH and a pressurized channel unit adjacent to it. That is, two adjacent pressurized channels have a structure of sharing one pressurized plate.

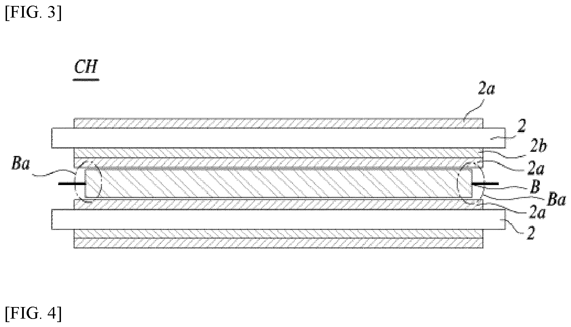

FIG. 3 is a cross-sectional view that illustrates a single pressurized channel unit that forms the apparatus for charging and discharging a secondary battery according to the conventional art.

The pressurized channel CH includes a pressurized plate 2, a heating pad 2b that is formed on one side of the pressurized plate, and a silicone pad 2a that is formed on both sides of the pressurized plate on which the heating pad 2b is formed. The secondary battery B is interposed between a pair of opposing pressurized plates 2.

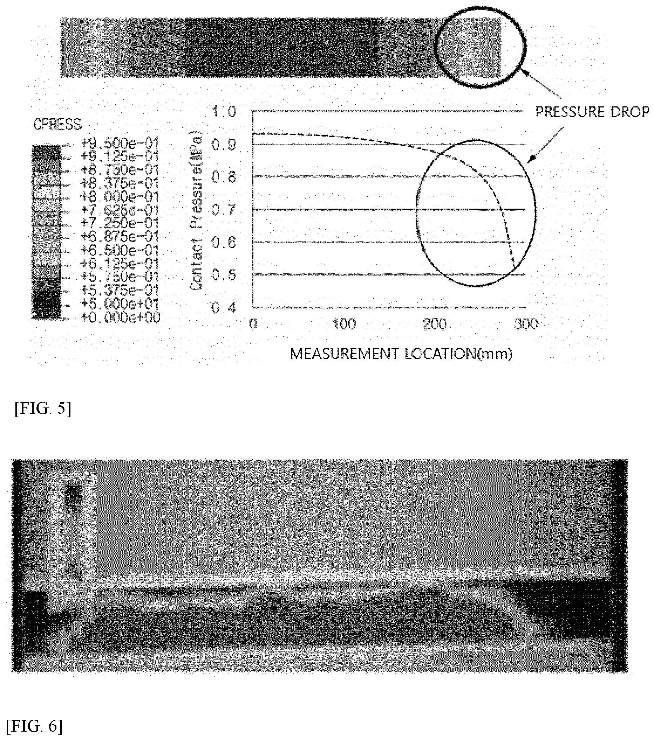

FIG. 4 is a graph for explaining problems caused by the apparatus for charging and discharging a secondary battery according to the conventional art, and FIG. 5 is an image showing the problems caused by the apparatus for charging and discharging a secondary battery according to the conventional art.

By referring to FIG. 4 and FIG. 5, it can be known that when a formation process is carried out by the apparatus for charging and discharging a secondary battery of the conventional art, pressure non-uniformity may occur on both ends Ba of the secondary battery B.

Specifically, by referring to FIG. 4, when the position of one end is 300mm from the middle (origin 0) of the secondary battery, it can be known that a sharp decline in the pressure occurs at 200mm point. In addition, by referring to FIG. 5, it can be known that the sharp decline occurs at both ends of the secondary battery where formation process is carried out by the apparatus for charging and discharging a secondary battery of the conventional art.

Such a pressure non-uniformity causes a quality degradation phenomenon such as lithium being precipitated. Such pressure non-uniformity is caused by the thickness deviation in the electrical field direction, and the apparatus for charging and discharging a secondary battery of the conventional art is currently not able to sufficiently compensate for this.

### [Description of the Invention]

### [Technical Problem]

The present invention is directed to providing a pressurized channel that can improve pressure drop in both ends of the secondary battery during the formation process and providing an apparatus for charging and discharging a secondary battery that includes the pressurized channel.

### [Technical Solution]

The pressurized channel according to an exemplary embodiment of the present invention includes a pair of pressurized plates disposed on both sides of the secondary battery with the secondary battery interposed therebetween, and the pressurized plate consists of a body part and an exterior part connected to both ends of the body part and including a tube inside that is expanded by hydraulic pressure.

The exterior part, according to an embodiment of the present invention, has an inserting space into which the tube is inserted.

The pressurized channel according to an embodiment of the present invention may contain a heating pad that is formed on at least one side of the pressurized plate, and a silicone pad that is formed on both sides of the pressurized plate on which the heating pad is formed.

The pressurized channel according to an embodiment of the present invention comprises a fluid supplying part that supplies fluid into the tube.

The fluid supplying part of an embodiment of the present invention includes a fluid tank that stores fluid to be supplied to the tube; a compressor that compresses the fluid being supplied to the tube with a predetermined pressure; and a flow channel that supplies the fluid compressed by the compressor to the tube or retrieves the fluid from the tube.

In an embodiment of the present invention, assuming that the middle of the pressurized plate is the origin 0 and that the end of one side is 1, the exterior part or the tube may be formed at a position 2/3 or more from the origin 0 of the pressurized plate toward the one side end.

The apparatus for charging and discharging the secondary battery according to an embodiment of the present invention comprises a frame that accommodates multiple secondary batteries on the inside; and multiple pressurized channels, which contain a pair of pressurized plates installed inside the frame and disposed on both sides with one of the multiple secondary batteries interposed therebetween, and the pressurized plate is composed of a body part and an exterior part that connected to both ends of the body part and including a tube inside that is expanded by hydraulic pressure on the inside.

The exterior part, according to an embodiment of the present invention, has an inserting space into the tube is inserted.

One embodiment of present invention comprises a heating pad that is formed on at least one side of the pressurized plate, and a silicone pad that is formed on both sides of the pressurized plate on which the heating pad is formed.

The pressurized channel according to one embodiment of the present invention comprises a fluid supplying part that supplies fluid to the tube.

The fluid supplying part of an embodiment of the present invention includes a fluid tank that stores fluid to be supplied to the tube; a compressor that compresses the fluid being supplied to the tube with a predetermined pressure; and a flow channel that supplies the fluid compressed by the compressor to the tube or retrieves the fluid from the tube.

In one embodiment of the present invention, assuming that the middle of the pressurized plate is the origin 0 and that the end of one side is 1, the exterior part or the tube may be formed at a position 2/3 or more from the origin 0 of the pressurized plate toward the one side end.

Other specific details of the exemplary embodiments according to various aspects of the present invention are included in the detailed description below.

### [Advantageous Effects]

According to an exemplary embodiment of the present invention, it is possible to improve pressure drop at both ends of the secondary battery that occurs during the formation process.

### [Brief Description of the Drawings]

FIG. 1 and FIG. 2 are drawings illustrating an apparatus for charging and discharging the secondary battery according to the conventional art.
FIG. 3 is a cross-sectional view that illustrates a single pressurized channel unit that forms the apparatus for charging and discharging the secondary battery according to the conventional art.
FIG. 4 is a graph for explaining problems caused by the apparatus for charging and discharging the secondary battery according to the conventional art.
FIG. 5 is an image showing the problems caused by the apparatus for charging and discharging the secondary battery according to the conventional art.
FIG. 6 is an exploded perspective view illustrating a secondary battery applied to the apparatus for charging and discharging the secondary battery according to an exemplary embodiment of the present invention.
FIG. 7 is a cross-sectional view illustrating a single pressurized channel unit that forms the apparatus for charging and discharging the secondary battery according to one exemplary embodiment of present invention.
FIG. 8 is a drawing conceptually illustrating the exterior part of the pressurized plate expanding as the tube expands due to hydraulic pressure.
FIG. 9 is a drawing conceptually illustrating the process of pressure drop on both ends of the secondary battery being prevented by the pressurized channel according to one exemplary embodiment of the present invention.
FIG. 10 is a schematic diagram of a pressurized channel unit according to another exemplary embodiment of the present invention.

### [Best Mode for Carrying Out the invention]

The present invention may have various modifications and various examples, and thus specific examples are illustrated in the drawings and described in detail in the detailed description. However, it should be understood that the present invention is not limited to specific embodiments, and includes all modifications, equivalents or alternatives within the spirit and technical scope of the present invention.

The terms that the present invention use are only used to explain a specific example and is not intended to limit thereto. A singular expression includes a plural expression unless the context indicates otherwise. The terms "comprise," "include" and "have" used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

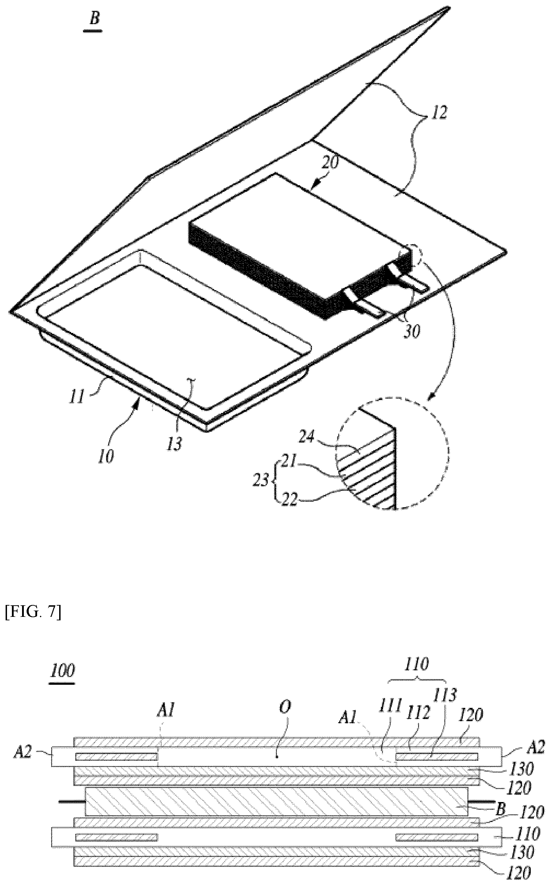

First, the secondary battery will be described by referring to FIG. 6. FIG. 6 is an exploded perspective view illustrating the secondary battery applied to the apparatus for charging and discharging the secondary battery according to an exemplary embodiment of the present invention.

Referring to FIG. 6, the secondary battery B contains a battery case 10, an electrode assembly 20 that is accommodated at the accommodating part 13 of the battery case 10, and an electrolyte. Here, an electrode assembly 20 may contain an electrode lead 30 that is electrically connected to the electrode 23.

As a power plant capable of charging and discharging, the electrode assembly 20 can be formed by alternatively layering an electrode 23 and a separation membrane 24.

The electrode 23 may be composed of a cathode 21 and an anode 22. Here, the electrode assembly 20 may form a structure where the cathode 21/the separation membrane 24/the anode 22 are alternatively stacked. And the electrode lead 30 may include a cathode lead that connects to the cathode 21 and an anode lead that connects to the anode 22. In FIG. 6, the electrode lead is illustrated as being formed in one direction of the electrode assembly 20, but it can also be formed in both directions of the electrode assembly 20.

The cathode 21 may contain a cathode current collector and a cathode active material stacked on a cathode current collector. The cathode current collector may be made of an aluminum foil. The cathode active material may be formed of lithium manganese oxide, lithium cobalt oxide, lithium nickel oxide, lithium iron phosphate, or a compound or a mixture containing one or more of these.

The anode 22 may contain an anode current collector and an anode active material layered on an anode current collector. The anode current collector may be made of a foil made of, for example, a copper material. The anode active material may be a compound or a mixture that includes a graphite-based material.

The separation membrane 24 electrically insulates between the cathode 21 and the anode 22 by being made of an insulating material. The separation membrane can be formed of microporous polyolefin-based resin film such as polyethylene and polypropylene.

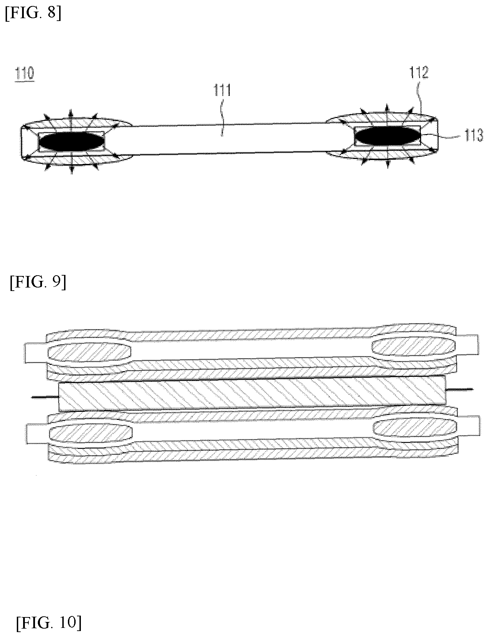

Next, a pressurized channel according to an exemplary embodiment of the present invention will be explained by referring to FIG. 7 through FIG. 9. FIG. 7 is a cross-sectional view illustrating a single pressurized channel unit that forms the apparatus for charging and discharging a secondary battery according to an exemplary embodiment of the present invention, FIG. 8 is a drawing conceptually illustrating the exterior part of the pressurized plate expanding as the thermal expansion part expands due to heat, and FIG. 9 is a drawing conceptually illustrating the process of pressure drop on both ends of the secondary battery being prevented by the pressurized channel according to an embodiment of the present invention.

As illustrated in FIG. 7, the pressurized channel 100 according to an exemplary embodiment of the present invention contains a pressurized plate 110, a silicone pad 120, and a heating pad 130.

The heating pad 130 is formed on at least one side of the pressurized plate 110 to supply heat to the pressurized plate 110.

The silicone pad 120 is formed on both sides of the pressurized plate 110 on which the heating pad 130 is formed to pressurize the secondary battery B.

A pair of pressurized plates is disposed on both sides of the secondary battery with the secondary battery interposed therebetween. Here, "disposed on both sides" may include a state of being either spaced apart or in contact with both sides of the secondary battery B. During the formation process, when the pressurized plate 110 pressurizes the secondary battery B, a pair of pressurized plate 110 is in a state of being in contact with both sides of the secondary battery B, and if the pressure is released, a pair of pressurized plate 110 is in a state of being spaced apart from both sides of the secondary battery B.

Specifically, the pressurized plate 110 includes a body part 111 and an exterior part 112, and the exterior part 112 includes a thermal expansion part 113. In the following description, the body part 111 and the exterior part 112 are described as separate sections, but in practice, body part 111 and exterior part 112 represents one section of the pressurized plate 110, respectively.

The body part 111 is the middle section of the pressurized plate 110 where there is relatively less pressure drop occurring in the secondary battery B during the formation process. Body part 111 is formed over a predetermined length section (0 ∼ A1) in the direction of both ends of the pressurized plate 110 (0 - A2 direction) with the middle of the pressurized plate 110 as the origin 0.

The end A1 of the body part 111 is where sharp decline in pressure of the secondary battery B occurs, and by referring to the above-mentioned FIG. 4 and FIG. 5, it can be known that the position of the end A1 of the body part 111 is approximately 2/3 of the distance from the origin 0 of the pressurized plate 110 to the one end A2 of the pressurized plate 110.

Accordingly, the exterior part 112 that forms connection with the body part 111 is formed in a position greater than or equal to 2/3 in the direction of one end of the pressurized plate 110 from the origin 0. The thermal expansion part 113 formed in the exterior part 112 is also formed at a position approximately 2/3 or more from the origin 0 of the pressurized plate toward on end of the pressurized plate 110.

The exterior part 112 is an outer region of the pressurized plate 110 where sharp drop in pressure of the secondary battery B occurs during the formation process. Referring to above- mentioned FIG.4 and FIG. 5, the exterior part 112 is formed over the section from the end A1 of body part 111 to the one end A2 of the pressurized plate 110. That is, the exterior part 112 covers the predetermined length area (A1 ∼ A2).

The body part 111 and the exterior part 112, as an individual section of the pressurized plate 110, may be formed of the same material. The body part 111 and the exterior part 112 may be formed of a metal that has a first coefficient of thermal expansion. The metal with first coefficient of thermal expansion, for example, may be aluminum.

The exterior part 112 includes a thermal expansion part 113. The exterior part 112 may be formed in a shape where it is wrapping around the thermal expansion part 113. The thermal expansion part 113 contains a material that has a second coefficient of thermal expansion, which has a greater coefficient of thermal expansion compared to the material that comprises the body part 111 and the exterior part 112. A material that has a second coefficient of thermal expansion, for example, may be magnesium, zinc, tin, cadmium, lead, etc. In addition, a material that has a second coefficient of thermal expansion may be a nonmetal such as paraffin, rubber, etc.

When the body part 111 and the exterior part 112 is formed of an aluminum, the thermal expansion part 113 may be formed of an alloy that contains at least one or more of the materials selected from the group consisting of magnesium, zinc, tin, cadmium, lead, etc. In addition, the thermal expansion part 113 may be formed of a compound that contains at least one or more of the materials selected from the group consisting of paraffin and rubber. Moreover, depending on the choice, the thermal expansion part 113 may be formed of a compound that contains at least one or more of the materials selected from the group consisting of magnesium, zinc, tin, cadmium, lead, paraffin, and rubber.

More specifically, the thermal expansion part 113 is preferably an alloy or a compound capable of volume expansion of approximately 55 - 65um under a formation process temperature condition (approximately 60°C).

During the formation process, such thermal expansion part 113 thermally expands more rapidly than the body part 111 and the exterior part 112. As the thermal expansion part 113 gets expanded, the exterior part that wraps around the thermal expansion part 113 also gets expanded (please refer to 112 and 113 of FIG. 8).

Furthermore, as illustrated in FIG. 9, the heating pad and the silicone pad formed in the exterior part 112 region also get expanded to compensate for the thickness deviation of both ends of the secondary battery B, solving the pressure non-uniformity.

Meanwhile, the apparatus for charging and discharging a secondary battery according to an exemplary embodiment of the present invention only differs in the formation in the pressurized channel unit CH, and the rest of the configuration is substantially the same as the formation of FIG. 1 and FIG. 2, so a repeated explanation will be omitted.

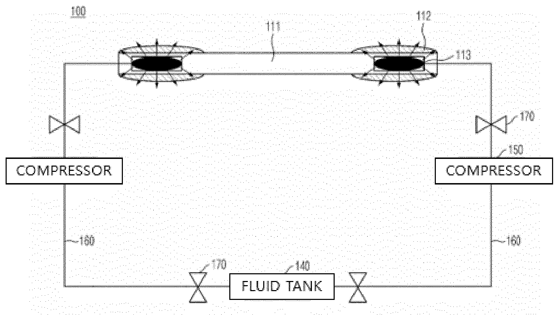

Next, pressurized channel unit according to another embodiment of the present invention will be explained. FIG. 10 is a schematic diagram of a pressurized channel unit according to another embodiment of the present invention.

Referring to FIG. 10, the pressurized channel comprises a fluid supplying part that supplies fluid to the tube. Additionally, the fluid supplying part may retrieve the fluid from the tube 113.

Such fluid supplying part 140-170 includes a fluid tank 140 that stores fluid to be supplied to the tube; a compressor 150 that compresses the fluid being supplied to the tube with a predetermined pressure; and a flow channel 160 that supplies the fluid compressed by the compressor to the tube or retrieves the fluid from the tube. Additionally, the fluid supplying part may further optionally include a control valve 170 or a control part (not illustrated).

The fluid tank stores fluid to be supplied. The fluid may either be a gas or a liquid.

The compressor compresses the fluid to a predetermined pressure, causing the fluid to expand the tube, which then causes the pressurized plate portion of the exterior part to be expanded. In addition, the pressurized plate of the present invention, in order to accelerate the expansion of the exterior part due to expansion of the tube, may further include a heating part for heating the fluid supplied to the tube.

The flow channel supplies the fluid by guiding the fluid stored in the fluid tank to the tube, or guides the fluid inside the tube to be retrieved to the fluid tank after the formation process is completed.

The control valve controls the flow of the fluid (supply and retrieval).

The first control valve V1 is formed between the fluid tank and a compressor, and controls the fluid supply to the compressor.

The second control valve V2 is formed between the compressor and the tube, and controls the fluid supply to the tube.

The control part controls the flow of the fluid (supply and retrieval) by controlling the movement of the control valves. Specifically, the control part controls the operation of the first and second control valves based on the beginning/ending signal of the formation process.

As described above, the present invention has been described with reference to exemplary embodiments, but it should be understood by those skilled in the art or those of ordinary skill in the art that the present invention can be variously modified and changed without departing from the spirit and technical scope of the present invention described in the accompanying claims.

## Claims

1. A pressurized channel comprises:
a pair of pressurized plates disposed on both sides of the secondary battery with the secondary battery interposed therebetween,
and the pressurized plate consists of a body part and an exterior part that connected to both ends of the body part and including a tube inside that is expanded by hydraulic pressure.

2. The pressurized channel of claim 1, wherein
the exterior part has an inserting space into which the tube is inserted.

3. The pressurized channel of claim 1, comprises
a heating pad that is formed on at least one side of the pressurized plate,
and a silicone pad that is formed on both sides of the pressurized plate on which the heating pad is formed.

4. The pressurized channel of claim 1, further comprises
a fluid supplying part that supplies fluid to the tube.

5. The pressurized channel of claim 4,
the fluid supplying part of the pressurized channel comprises:
a fluid tank that stores fluid to be supplied to the tube;
a compressor that compresses the fluid being supplied to the tube with a predetermined pressure;
and a flow channel that supplies the fluid compressed by the compressor to the tube or retrieves the fluid from the tube.

6. The pressurized channel of claim 1, wherein
assuming that the middle of the pressurized plate is the origin 0 and that the end of one side is 1, the exterior part or the tube may be formed at a position 2/3 or more from the origin 0 of the pressurized plate toward the one side end.

7. An apparatus for charging and discharging a secondary battery comprises:
a frame that accommodates multiple secondary batteries on the inside;
and multiple pressurized channels, which contain a pair of pressurized plates installed inside the frame and disposed on both sides with one of the multiple secondary batteries interposed therebetween,
and the pressurized plate is composed of a body part and an exterior part that connected to both ends of the body part and including a tube inside that is expanded by hydraulic pressure.

8. The apparatus for charging and discharging the secondary battery of claim 7, wherein the exterior part has an inserting space into which the tube is inserted.

9. The apparatus for charging and discharging the secondary battery of claim 7, comprises
a heating pad that is formed on at least one side of the pressurized plate;
and a silicone pad that is formed on both sides of the pressurized plate on which the heating pad is formed.

10. The apparatus for charging and discharging the secondary battery of claim 7,
the pressurized channel further comprises a fluid supplying part that supplies fluid to the tube.

11. The apparatus for charging and discharging the secondary battery of claim 10, wherein
the fluid supplying part comprises:
a fluid tank that stores fluid to be supplied to the tube;
a compressor that compresses the fluid being supplied to the tube with a predetermined pressure; and
a flow channel that supplies the fluid compressed by the compressor to the tube or retrieves the fluid from the tube.

12. The apparatus for charging and discharging the secondary battery of claim 7, wherein assuming that the middle of the pressurized plate is the origin 0 and that the end of one side is 1, the exterior part or the tube may be formed at a position 2/3 or more from the origin 0 of the pressurized plate toward the one side end.
